# FASCICULE DE BREVET EUROPEEN

(11) **EP 0 500 427 B1**
(45) Date de publication et mention de la délivrance du brevet: **10.04.1996**
(21) Numéro de dépôt: 92400395.7
(22) Date de dépôt: 13.02.1992
(51) Int. Cl.: C08F 2/32

(54) **Procédé de préparation de (co)-polymères solubles dans leurs compositions (co)monomères**
Verfahren zur Herstellung von in ihrer monomerischen Zusammensetzungen lösbaren (Co)-Polymeren
Process for preparing (co)-polymers soluble in their monomeric compositions

(30) Priorité: 21.02.1991 FR 9102076
(43) Date de publication de la demande: 26.08.1992
(73) Titulaire: ELF ATOCHEM S.A., F-92800 Puteaux (FR)
(72) Inventeur: Mailhos-Lefievre, Valérie, F-60500 Chantilly (FR); Nogues, Pierre, F-27300 Bernay (FR)

(56) Documents cités:
- DE-A- 1 645 659
- GB-A- 962 702

## Description

L'invention, objet de la présente demande, concerne un procédé de préparation de polymères ou de copolymères, essentiellement de type acrylique, méthacrylique ou styrénique, solubles dans leurs compositions monomères ou comonomères, par polymérisation en émulsion suspendue du ou des monomères correspondants.

Par polymérisation en émulsion suspendue, on entend une polymérisation, en présence d'un système amorceur dont au moins l'un des constituants est hydrosoluble, d'au moins un monomère dans une phase aqueuse dispersée sous forme finement divisée dans le dit monomère.

D'une manière générale, la polymérisation en émulsion suspendue peut être mise en oeuvre dans le cas où le ou les monomères peuvent être polymérisés en émulsion puisque la polymérisation a lieu au sein de la phase aqueuse discontinue et est alimentée par dissolution progressive du monomère, qui forme la phase continue du milieu réactionnel.

Suivant la solubilité ou l'insolubilité du (co)polymère (formé dans la phase aqueuse sous la forme d'un latex) dans la phase (co)monomère, on distingue deux cas :
* Dans le cas où le (co)polymère est insoluble dans sa composition (co)monomère, (par exemple : cas du PVC et du PAN) le polymère précipite et reste dans la gouttelette des grains d'allure sphérique. Ce cas est décrit dans les brevets français 69.01008, 69.37326, 69.37327 et 87.03636.
* Dans le cas où le (co)polymère est soluble dans la phase (co)monomère, le produit de la réaction est un mélange d'une solution de (co)polymère dans sa composition (co)monomère et de la phase aqueuse d'amorçage. La récupération du polymère passe alors par un traitement coûteux dudit mélange (précipitation, séchage...).Conformément à la présente invention, pour éviter le passage en solution du polymère formé dans la phase monomère, on ajoute à ladite phase (co)monomère un ou plusieurs non-solvants du (co)polymère, miscibles avec le ou les monomère(s).

Ce procédé permet l'obtention de (co)polymères formés de particules dont le diamètre moyen est, en général, compris entre 0,1 et 2000 µm, la porosité, évaluée par une valeur de prise de plastifiant à température ambiante, en général, comprise entre 2 et 200 g de dioctylphtalate (DOP) pour 100 g de résine, et la masse volumique apparente en général comprise entre 0,10 et 1,0 g/cm³.

Dans le cas de la polymérisation en suspension, l'utilisation de systèmes colloïdaux est nécessaire pour obtenir des grains de morphologie et de granulométrie désirées alors que le procédé, objet de la présente invention, permet l'obtention de grains de granulométrie comparable, sans utiliser de système tensio-actif ; ceci abaisse, d'une part, le prix du produit et, d'autre part, améliore la propreté de la résine et celle des eaux de polymérisation. En outre, en faisant varier le rapport initial de la phase aqueuse sur la phase organique (composition (co)monomère et non-solvant(s)), il est possible d'influer sur la porosité finale de la résine : par exemple, pour un rapport volumique initial de la phase aqueuse par rapport à la phase organique d'environ 10 %, on obtient des grains vitreux comparables à ceux obtenus en suspension; pour un rapport volumique initial phase aqueuse/phase organique de plus de 60%, on obtient des grains de grande porosité.

Selon le procédé de l'invention, on disperse la phase aqueuse, contenant au moins un des amorceurs, dans la phase organique constituée de la composition (co)monomère et du ou des non-solvant(s) et on réalise la polymérisation de ladite composition. Le volume d'eau mis en oeuvre dans le procédé conforme à l'invention est généralement compris entre 1 et 100% et de préférence entre 10 et 80% du volume de la phase organique. La quantité d'eau représente, en général, au moins 1% et de préférence au moins 10% par rapport au volume de la composition (co)monomère et des non-solvants.

Selon une première variante du procédé de l'invention, après préparation de la solution aqueuse d'au moins une partie du système amorceur, on réalise une dispersion finement divisée de celle-ci dans la phase organique préalablement homogénéisée contenant le(s) monomère(s) et le(s) non-solvant(s), puis soumet le milieu réactionnel ainsi préparé à des conditions de polymérisation en un seul stade réalisé sous agitation modérée. La dispersion peut être obtenue, à titre d'exemple, par une agitation cisaillante forte ou bien par l'utilisation d'une buse d'injection permettant d'envoyer directement la solution aqueuse dans la composition organique.

Selon une deuxième variante du procédé de l'invention, on réalise en un premier stade conjointement l'opération de dispersion finement divisée de la solution aqueuse d'au moins une partie du système amorceur dans la phase organique et l'opération de début de polymérisation de celle-ci sous agitation de turbulence élevée, jusqu'à un taux de conversion compris généralement entre 1 et 50% et de préférence entre 3 et 25%. Une fois ce taux de conversion atteint, on ajoute éventuellement au milieu réactionnel un mélange de composition (co)monomère et de non-solvant(s) complémentaire, identique à/ou différent de celui mis en oeuvre au cours du premier stade, puis soumet le milieu réactionnel au cours d'un deuxième stade à une polymérisation sous agitation lente, restant cependant suffisante pour éviter la réagglomération des grains en cours d'évolution.

Selon une troisième variante du procédé de l'invention, on réalise, en une première étape, dans un appareil dit prépolymériseur, conjointement les opérations de dispersion finement divisée de la solution aqueuse d'au moins une partie du système amorceur dans la composition (co)monomère et les non-solvant(s) et de prépolymérisation de celle-ci sous agitation de turbulence élevée, jusqu'à un taux de conversion généralement compris entre 1 et 30% et de préférence de 3 et 15% puis on soumet en une deuxième étape le milieu réactionnel à une polymérisation finale sous agitation lente, restant cependant suffisante pour éviter la réagglomération des grains en cours d'évolution.

Selon cette troisième variante du procédé de l'invention, on peut, entre les deux étapes, ajouter au milieu réactionnel un mélange de composition (co)monomère et de non-solvant(s) complémentaire identique à/ou différent de celui mis en oeuvre au cours de la première étape. L'addition au milieu réactionnel de ladite composition (co)monomère et de(s) non-solvant(s) (phase organique) complémentaire peut être effectuée avant, pendant et/ou après le transfert du milieu réactionnel dans le polymériseur.

On peut également effectuer une opération préliminaire de dispersion selon l'invention, sous forme finement divisée d'une solution aqueuse d'au moins une partie du système amorceur dans un mélange de composition (co)monomère et de non-solvant(s), puis réaliser la mise en solution de la partie complémentaire du système amorceur dans une composition de (co)monomère et de non-solvant(s) conjointement avec une opération de polymérisation en un ou deux stades, ou avec une opération de prépolymérisation suivie d'une polymérisation finale.

On peut également, dans le cas où l'on utilise un système amorceur composé de plusieurs constituants solubles dans l'eau, introduire séparément les solutions aqueuses desdits constituants dans le milieu réactionnel à divers stades du processus de polymérisation.

Le procédé de l'invention peut également être mis en oeuvre en continu, notamment selon les techniques décrites dans les certificats d'addition français référencés ci-avant (69.37326 et 69.37327).

Selon le procédé de l'invention, on peut introduire au moins un émulsifiant et/ou un agent de suspension dans le milieu réactionnel, le plus généralement par l'intermédiaire de la solution aqueuse d'au moins une partie du système amorceur. Dans le cas de la préparation de (co)polymères à base de méthacrylate de méthyle (MAM), de diamètre moyen des particules supérieur à environ 10 µm, le procédé de l'invention conduit, en l'absence d'émulsifiant, à des résines également de forme sensiblement sphérique dont la forme des particules est sensiblement sphérique et, en présence d'émulsifiant, toutes choses égales par ailleurs, à des résines, également de forme sensiblement sphérique, dont les particules présentent une granulométrie plus resserrée.

Parmi les émulsifiants susceptibles d'être mis en oeuvre, on peut citer, à titre d'exemple, les émulsifiants :
- de type cationique tels que les sels d'ammonium quaternaire de formule générale 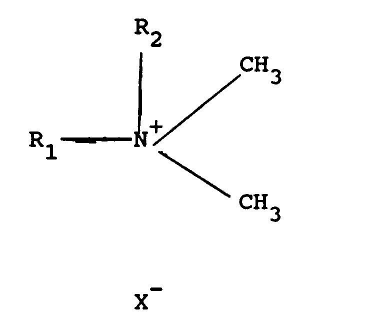 R₁ et R₂ étant des radicaux aliphatiques ou aromatiques et X un halogène,
- de type anionique tels que les savons d'acide gras, les alkylsulfates alcalins, les alkylsulfonates alcalins, les alkylarylsulfonates alcalins, les alkylsulfosuccinates alcalins, les alkylphosphates alcalins,
- de type non ionique tels que les polycondensats d'oxyde d'éthylène et/ou de propylène sur divers composés organiques hydroxylés tels que les alcools gras et les nonylphénols, lesdits émulsifiants pouvant être utilisés seuls ou en mélange.

Parmi les agents de suspension susceptibles d'être mis en oeuvre, on peut citer, à titre d'exemple, les alcools polyvinyliques, les dérivés de la cellulose tels que la méthylcellulose, la carboxycellulose, les gélatines.

Le taux d'émulsifiant et/ou d'agent de suspension éventuellement mis en oeuvre est généralement de 0 à 2% et de préférence de 0 à 0,5% en poids par rapport à la phase organique.

Pour une bonne mise en oeuvre du procédé de l'invention on utilise un système amorceur dont au moins l'un des constituants est insoluble dans la phase organique du milieu réactionnel, le ou lesdits constituants devant être solubles dans la phase aqueuse.

Parmi les systèmes amorceurs susceptibles d'être mis en oeuvre on peut citer à titre d'exemple : les persels, le peroxyde d'hydrogène, les persels ou le peroxyde d'hydrogène associés à un réducteur minéral ou organique tel que sels de métaux à plusieurs valences et notamment de fer et de cuivre, rongalite, bisulfites, métabisulfites, thiosulfates, sulfinates, acide ascorbique, oses et autres ; des systèmes dont l'un des composants est soluble dans la phase organique et légèrement soluble dans l'eau, l'autre composant étant soluble dans l'eau et insoluble dans la phase organique, systèmes parmi lesquels on peut citer : des systèmes formés d'oxydants tels les peroxydes, notamment le peroxyde d'acétylcyclohexanesulfonyle, les hydroperoxydes, tels ceux de cumène et de tertiobutyle activés par des réducteurs tels les sels de métaux à plusieurs valences, notamment de fer ou de cuivre, et plus spécialement par des sels tels que bisulfites, métabisulfites, thiosulfates, sulfinates, ou des réducteurs organiques tels l'acide ascorbique, les oses et autres, des systèmes formés de composants réducteurs, solubles dans la phase organique et peu solubles dans l'eau tels la benzoïne, les acétylacétonates et de composants oxydants, d'activation, insolubles dans la phase organique et solubles dans l'eau tels les persels ou le peroxyde d'hydrogène.

Le système amorceur représente généralement de 0,01 à 1% et de préférence de 0,02 à 0,1 % en poids par rapport au(x) (co)monomère(s) mis en oeuvre. Le système amorceur représente généralement de 0,01 à 5% et de préférence de 0,05 à 1,5 % en poids par rapport à l'eau de la solution aqueuse.

Par ailleurs, on peut ajouter dans la phase aqueuse, outre des systèmes amorceur et tensio-actif, au moins un produit hydrosoluble. A titre d'exemple de produit hydrosoluble, on peut citer un sel minéral, tel que le chlorure de calcium, un composé organique tel que le bleu de méthylène ou bien encore un monomère hydrosoluble, tel que l'acide acrylique.

La quantité de produit(s) hydrosoluble(s) représente généralement de 0,001 à 50 % et de préférence de 0,05 à 10 % en poids par rapport à l'eau de la solution aqueuse.

On peut également ajouter dans ladite phase aqueuse au moins un produit limiteur de chaîne. A titre d'exemple, on peut citer un mercaptan, tel que le laurylmercaptan ou le mercaptoéthanol. La quantité de limiteur(s) de chaîne représente généralement de 0,01 à 5 % en poids, et de préférence, de 0,05 à 1% en poids par rapport au(x) (co)monomère(s).

Les (co)monomères mis en oeuvre selon l'invention présentent une certaine solubilité dans la phase aqueuse finement dispersée précédemment définie.

En général, leur solubilité dans l'eau à 20 °C est supérieure à 0,001 g/l. A titre d'exemple, la solubilité dans l'eau à 20°C du MAM est égale à 16 g/l et celle du styrène à 70°C est égale à 0,16g/l.

Ils sont notamment choisis dans le groupe formé par les acrylates d'alkyle, tels que l'acrylate de butyle, les méthacrylates d'alkyle, tels que le méthacrylate de méthyle, les styréniques, tels que le styrène et les acétates, tels que l'acétate de vinyle et les autres monomères vinyliques pourvu que le (co)polymère formé soit insoluble dans la phase organique et que les non-solvants utilisés soient miscibles entre eux et avec les (co)monomères.

Le mélange homogène (co)monomères et non-solvant(s) peut être notamment réalisé directement dans le réacteur de polymérisation ou bien dans un autre mélangeur, selon l'une ou l'autre des variantes précédemment décrites. Le volume de non-solvant(s) utilisé est en général compris entre 5 et 95% et de préférence entre 10 et 70% du volume de la composition (co)monomère.

Les (co)polymères formés, et ce, à n'importe quel stade du procédé, objet de l'invention, sont solubles dans leur composition (co)monomère, mais sont insolubles dans le mélange de non-solvant(s) et de (co)monomères qui n'a pas réagi, i.e, la phase organique.

A titre d'exemple de (co)polymères et de non-solvant(s) selon l'invention on peut citer :
- le polyméthacrylate de méthyle (PMMA), non soluble dans un mélange contenant du méthacrylate de méthyle et de 5 à 95 % et de préférence de 10 à 75% en volume de non-solvant tel que l'hexane.
- le polystyrène, non soluble dans un mélange contenant du styrène et de 5 à 95 % et de préférence de 10 à 75% en volume de non-solvant tel que l'éthanol.
- les copolymères obtenus à partir d'une composition co-monomère de méthacrylate de méthyle et de 0,5 à 30 % et de préférence de 0,5 à 15 % en poids d'acétate de vinyle et contenant de 5 à 95% et de préférence de 10 à 75% en volume par rapport à la composition comonomère, de non-solvant, tel que le méthanol.

Les réactions de polymérisation selon l'invention peuvent être réalisées selon une large échelle de température, généralement comprise entre 0 et 200°C et de préférence entre 50 et 100°C. Toutefois, on peut également envisager de réaliser des opérations de polymérisation à des températures inférieures ou égales à 0°C en ajoutant préalablement à la solution aqueuse d'au moins une partie du système amorceur devant être dispersée au moins un agent antigel tel que notamment du chlorure de calcium, ou un polyalcool.

Dans le réacteur, le (co)polymère formé, selon le procédé de l'invention, se trouve en suspension dans une phase liquide constituée de non-solvant(s), de composition (co)monomère qui n'a pas réagi et éventuellement d'eau. Pour récupérer le (co)polymère sous forme pulvérulente, on élimine la phase liquide. En fonction du diamètre des particules de (co)polymère obtenues et de la nature dudit mélange, différentes variantes peuvent être mises en oeuvre.

Parmi les procédés de récupération des particules de (co)polymère sous forme pulvérulente, on peut citer :
- la vidange de la suspension suivie d'une décantation puis d'un séchage,
- la vidange puis l'atomisation des particules (dans le cas de particules de diamètre moyen inférieur environ à 10 µm),
- le dégazage sous agitation puis tirage sous vide, et enfin le séchage dans le réacteur.

On peut également effectuer des opérations de coagulation, d'essorage, de filtration et/ou d'écaillage.

Le (co)polymère pulvérulent est ensuite généralement soumis à une opération de tamisage, visant à isoler le produit noble défini comme passant à travers un tamis d'ouverture de mailles donnée, choisie en fonction du diamètre moyen de particules que l'on cherche à obtenir et de l'utilisation à laquelle ledit produit est destiné.

Les exemples suivants illustrent l'invention sans toutefois la limiter.
. La masse volumique apparente des (co)polymères est déterminée selon la norme NFT 51-003 (méthode A)
. La prise de plastifiant à température ambiante des (co)polymères est déterminée selon la norme NFT 51-782.
. Le pourcentage pondéral de refus 315 µm est mesuré après passage de la résine dans un tamis d'ouverture de mailles de 315 µm.

### EXEMPLE 1 :

Dans un réacteur vertical en verre de 1 l, muni d'un agitateur à double turbine à six pales plates tournant à 500 trs/mn et d'un déflecteur, on introduit, après mise sous vide 186 g de méthacrylate de méthyle (MAM) stabilisé par 0,0015% en poids de l'éther monométhylique de l'hydroquinone et 198g de n-hexane. On ajoute ensuite une solution aqueuse constituée de 0,8 g de persulfate de potassium dans 152,5 g d'eau et on remet sous vide pendant 1 mn.

La température du milieu est portée à 70°C en 40 mn puis maintenue constante.

Après 2 h de polymérisation à 70°C suivi d'un refroidissement jusqu'à la température ambiante, le produit obtenu qui se trouve sous la forme d'une suspension de polymère dans le non-solvant et le monomère résiduel est vidangé et séché dans une étuve à 80°C. On recueille 170g de polyméthacrylate de méthyle(PMMA) sous forme pulvérulente.

### EXEMPLE 2 (Comparatif):

L'appareillage et les conditions de polymérisation sont les mêmes que dans l'exemple 1 à l'exception de l'ajout de non-solvant (n-hexane).

Le produit formé au cours de la polymérisation est une pâte dont la viscosité augmente avec le taux de transformation. Cette pâte visqueuse et collante n'est pas directement vidangeable du réacteur.

### EXEMPLE 3 :

L'appareillage et les conditions de polymérisation sont les mêmes que dans l'exemple 1, à ceci près que le n-hexane est remplacé par 234g de cyclohexane. Après 2 h de polymérisation à 70°C, vidange et séchage, on recueille 182 g de PMMA sous forme pulvérulente.

### EXEMPLE 4 :

L'appareillage et les conditions de polymérisation sont les mêmes que dans l'exemple 1, à ceci près que le n-hexane est remplacé par 212 g de décaline. Après 2 h de polymérisation à 70°C, vidange et séchage, on recueille 134 g de PMMA sous forme pulvérulente.

### EXEMPLE 5 :

L'appareillage et les conditions de polymérisation sont les mêmes que dans l'exemple 1, à ceci près que le rapport MAM/non-solvant est diminué de moitié pour un même taux de remplissage du réacteur. On ajoute donc 130 g de MAM et 277 g de n-hexane puis 5,5 g de persulfate de potassium dans 105 g d'eau. Après 2 h de polymérisation à 70°C, vidange et séchage, on recueille 96 g de PMMA sous forme pulvérulente.

### EXEMPLE 6 :

L'appareillage et les conditions de polymérisation sont les mêmes que dans l'exemple 1, à ceci près que le rapport eau/MAM est diminué de moitié. On ajoute donc 232 g de MAM et 247 g de n-hexane puis 9,9 g de persulfate de potassium dans 100 g d'eau. Après 2 h de polymérisation à 70°C, vidange et séchage, on recueille 202 g de PMMA sous forme pulvérulente.

### EXEMPLE 7 :

L'appareillage et les conditions de polymérisation sont les mêmes que dans l'exemple 1, à ceci près que le rapport eau/MAM est multiplié par deux. On ajoute donc 186 g de MAM et 198 g de n-hexane puis 8 g de persulfate de potassium dans 305 g d'eau. Après 2 h de polymérisation à 70°C, vidange et séchage, on recueille 173 g de PMMA sous forme pulvérulente.

### EXEMPLE 8 :

L'appareillage et les conditions de polymérisation sont les mêmes que dans l'exemple 1, à ceci près que la vitesse d'agitation est diminuée de moitié (250 trs/mn). Après 2 h de polymérisation à 70°C, vidange et séchage, on recueille 146 g de PMMA sous forme pulvérulente.

### EXEMPLE 9 :

L'appareillage est le même que dans l'exemple 1. Dans le réacteur, dont la vitesse du mobile d'agitation est de 500 trs/mn, on introduit, après mise sous vide, 186 g de MAM et 198 g de n-hexane. On ajoute ensuite une solution préalablement homogénéisée contenant 0,8 g de persulfate de potassium et 0,46 g de dodécylbenzène sulfonate dans 152,5 g d'eau. On remet sous vide pendant 1 mn. La température du milieu est portée à 70°C en 40 mn et est maintenue constante. Après 2 h de polymérisation à 70°C,puis refroidissement jusqu'à la température ambiante, le produit obtenu, qui se trouve sous la forme d'une suspension de polymère dans le non-solvant et le monomère résiduel, est vidangé et séché dans une étuve à 80°C. On recueille 176 g de PMMA sous forme pulvérulente.

### EXEMPLE 10 :

L'appareillage et les conditions de polymérisation sont les mêmes que dans l'exemple 9, à ceci près que la quantité de dodécyl-benzènesulfonate mis en oeuvre est de 0,15 g. Après 2 h de polymérisation à 70°C, vidange et séchage, on recueille 179 g de PMMA sous forme pulvérulente.

### EXEMPLE 11 :

L'appareillage et les conditions de polymérisation sont les mêmes que dans l'exemple 9, à ceci près que le dodécylbenzènesulfonate est remplacé par 1 g de colloïde éthyl-hydroxyéthyl cellulose. Après 2 h de polymérisation à 70°C, vidange et séchage, on recueille 177 g de PMMA sous forme pulvérulente.

### EXEMPLE 12 :

L'appareillage et les conditions opératoires sont les mêmes que dans l'exemple 9, à ceci près que le dodécylbenzènesulfonate est remplacé par 1 g de colloïde alcool polyvinylique solide de taux d'hydrolyse 72,5% et de masse moléculaire molaire en poids 35 000. Après 2 h de polymérisation à 70°C, vidange et séchage, on recueille 170 g de PMMA sous forme pulvérulente.

### EXEMPLE 13 :

L'appareillage et les conditions opératoires sont les mêmes que dans l'exemple 1, à ceci près que l'on ajoute également dans la phase aqueuse 0,56 g de laurylmercaptan. Après 2 h de polymérisation à 70°C, vidange et séchage, on recueille 171 g de PMMA sous forme pulvérulente.

### EXEMPLE 14 (Comparatif) :

A titre de comparaison, on mesure les différentes caractéristiques d'une résine de PMMA fabriquée en suspension et commercialisée par la Société ALTULOR pour fabriquer des plaques extrudées, elles-mêmes commercialisées sous la marque ALTULEX.

### EXEMPLE 15 :

L'appareillage est le même que dans l'exemple 1. Dans le réacteur, dont la vitesse du mobile d'agitation est de 500 trs/mn, on introduit, après mise sous vide, 169 g de MAM, 18,5 g d'acétate de vinyle et 198 g de n-hexane. On ajoute ensuite une solution de 0,8 g de persulfate de potassium et 0,25 g de métabisulfite de potassium dans 152,5 g d'eau et on remet sous vide pendant 1 mn. La température du milieu est portée à 55°C en 40 mn et est maintenue constante. Après 2 h de polymérisation à 55°C, puis refroidissement jusqu'à la température ambiante, on vidange le produit qui se trouve sous la forme d'une suspension de copolymère dans le non-solvant et les comonomères résiduels Le produit est séché dans une étuve à 60°C. On recueille 160 g de copolymère méthacrylate de méthyle/acétate de vinyle sous forme pulvérulente.

### EXEMPLE 16 :

L'appareil et les conditions de polymérisation sont les mêmes que dans l'exemple 1 mais le monomère utilisé est le styrène (181 g). Après 2 h de polymérisation à 70°C, vidange et séchage, on recueille 18,1 g de polystyrène.

Les caractéristiques des procédés et des produits de chacun des exemples ci-dessus sont reprises dans le Tableau 1.

**TABLEAU 1/3**

| N° EX | NATURE | | RAPPORT PONDERAL INITIAL | |
|---|---|---|---|---|
| | COMPOSITION | NON-SOLVANT | NON SOLVANT/COMPOSITION (CO) MONOMERE | EAU/COMPOSITION (CO) MONOMERE |
| 1 | MAM | N-hexane | 1,06 | 0,82 |
| 2 | MAM | N-hexane | 0 | 0,82 |
| 3 | MAM | cyclohexane | 1,26 | 0,82 |
| 4 | MAM | décaline | 1,14 | 0,82 |
| 5 | MAM | N-hexane | 2,13 | 0,82 |
| 6 | MAM | N-hexane | 1,06 | 0,43 |
| 7 | MAM | N-hexane | 1,06 | 1,64 |
| 8 | MAM | N-hexane | 1,06 | 0,82 |
| 9 | MAM | N-hexane | 1,06 | 0,82 |
| 10 | MAM | N-hexane | 1,06 | 0,82 |
| 11 | MAM | N-hexane | 1,06 | 0,82 |
| 12 | MAM | N-hexane | 1,06 | 0,82 |
| 13 | MAM | N-hexane | 1,06 | 0,82 |
| 14 | MAM | | | ? |
| 15 | MAM/ACETATE DE VINYLE | N-hexane | 1,06 | 0,81 |
| 16 | STYRENE | N-hexane | 1,09 | 0,84 |

**TABLEAU 2/3**

| N° | ADDITIFS | VITESSE D'AGITATION (trs/mn) | TAUX DE CONVERSION % |
|---|---|---|---|
| 1 | / | 500 | 91 |
| 2 | / | 500 | |
| 3 | / | 500 | 97,8 |
| 4 | / | 500 | 72 |
| 5 | / | 500 | 73,8 |
| 6 | / | 500 | 87 |
| 7 | / | 500 | 93 |
| 8 | / | 500 | 78,5 |
| 9 | dodécylbenzène sulfonate | 500 | 94,6 |
| 10 | dodécylbenzène sulfonate | 500 | 96,2 |
| 11 | éthylhydroxy éthylcellulose | 500 | 95,2 |
| 12 | alcool polyvinylique | 500 | 91,4 |
| 13 | laurylmercaptan | 500 | 91,9 |
| 14 | ? | ? | ? |
| 15 | / | 500 | 85,3 |
| 16 | / | 500 | 10 |

**TABLEAU 3/3**

| N° EX | MASSE VOLUMIQUE APPARENTE (g/cm³) | PRISE DE PLASTIFIANT A TEMPERATURE AMBIANTE (g DOP/100 g de résine) | POURCENTAGE PONDERAL DU REFUS A 315 µm |
|---|---|---|---|
| 1 | 450 | 11 | 5 |
| 2 | | | |
| 3 | | 12 | 79 |
| 4 | | 30 | 5 |
| 5 | | 26 | 85 |
| 6 | | 5 | 77 |
| 7 | | 44 | 49 |
| 8 | | 15 | 86 |
| 9 | | 5 | 25 |
| 10 | 350 | 80 | 92 |
| 11 | | 7 | 90,5 |
| 12 | | 6 | 82 |
| 13 | | 8 | 85,5 |
| 14 | 780 | 2 | 98 |
| 15 | | 31 | 35,5 |
| 16 | | 5 | 5 |

## Revendications

1. Procédé de préparation de (co)polymères solubles dans leur composition (co) monomère par polymérisation en émulsion suspendue caractérisé en ce que les (co)polymères sont insolubles dans la phase organique mise en oeuvre constituée de composition (co) monomère et de non-solvant(s).

2. Procédé selon la revendication 1, caractérisé en ce qu'on réalise d'abord, après préparation de la solution aqueuse d'au moins une partie du système amorceur, une dispersion finement divisée de celle-ci dans la phase organique puis on soumet le milieu réactionnel ainsi préparé à des conditions de polymérisation en un seul stade réalisé sous agitation modérée.

3. Procédé selon la revendication 1, caractérisé en ce qu'on réalise en un premier stade conjointement les opérations de dispersion finement divisée de la solution aqueuse d'au moins une partie du système amorceur dans la phase organique et de début de polymérisation de celle-ci sous agitation de turbulence élevée, jusqu'à un taux de conversion compris généralement entre 1 et 50 % et de préférence entre 3 et 25 %, on ajoute éventuellement au milieu réactionnel un mélange de composition (co)monomère et de non-solvant(s) complémentaire identique à/ou différente de celui mis en oeuvre au cours du premier stade, puis on soumet le milieu réactionnel au cours d'un deuxième stade à une polymérisation sous agitation lente, restant cependant suffisante pour éviter la réagglomération des grains en cours d'évolution.

4. Procédé selon la revendication 1, caractérisé en ce qu'on réalise en une première étape, dans un appareil dit prépolymériseur, conjointement les opérations de dispersion finement divisée de la solution aqueuse d'au moins une partie du système amorceur dans la phase organique et de prépolymérisation de celle-ci sous agitation de turbulence élevée, jusqu'à un taux de conversion compris généralement entre 1 et 30 % et de préférence entre 3 et 15 %, puis on soumet en une deuxième étape le milieu réactionnel à une polymérisation finale sous agitation lente, restant cependant suffisante pour éviter la réagglomération des grains en cours d'évolution.

5. Procédé selon la revendication 4, caractérisé par le fait qu'entre les deux étapes on ajoute au milieu réactionnel un mélange de composition (co)monomère et de non solvant(s) complémentaire identique à/ou différent de celui mis en oeuvre au cours de la première étape.

6. Procédé selon la revendication 1, caractérisé par le fait qu'on effectue une opérations préliminaire de dispersion, sous forme finement divisée, d'une solution aqueuse d'au moins une partie du système amorceur dans la phase organique puis on réalise la mise en solution de la partie complémentaire du système amorceur dans la phase organique conjointement avec une opération de polymérisation en un ou deux stades, ou avec une opération de prépolymérisation suivie d'une polymérisation finale.

7. Procédé selon l'une quelconque des revendication 1 à 6, caractérisé en ce que, dans le cas où l'on utilise un système amorceur composé de plusieurs constituants solubles dans l'eau, on introduit séparément les solutions aqueuses desdits constituants dans le milieu réactionnel à divers stades du processus de polymérisation.

8. Procédé selon l'une quelconque des revendications 1 à 7, caractérisé en ce qu'on introduit dans le milieu réactionnel, notamment par l'intermédiaire de la solution aqueuse d'au moins une partie du système amorceur, au moins un émulsifiant choisi dans le groupe formé des émulsifiants de type cationique, tels que les sels d'ammonium quaternaire, de type anionique, tels que les savons d'acides gras, les alkylsulfates alcalins, les alkylsulfonates alcalins, les alkylarylsulfonates alcalins, les alkylsulfosuccinates alcalins, les alkylphosphates alcalins, de type non ionique tels que les polycondensats d'oxyde d'éthylène et/ou de propylène sur divers composés organiques hydroxylés.

9. Procédé selon l'une quelconque des revendications 1 à 8, caractérisé en ce qu'on introduit dans le milieu réactionnel, notamment par l'intermédiaire de la solution aqueuse d'au moins une partie du système amorceur, au moins un agent de suspension choisi dans le groupe formé par les alcools polyvinyliques ; les dérivés de la cellulose tels que la méthylcellulose, la carboxycellulose ; les gélatines.

10. Procédé selon l'une quelconque des revendications 1 à 9, caractérisé par le fait qu'on emploie des compositions (co)monomères dont l'un au moins des monomères est choisi dans le groupe formé par les acrylates d'alkyle tels l'acrylate de méthyle, les méthacrylates d'alkyle tels le méthacrylate de méthyle, les monomères styréniques tels que le styrène, les acétates tels que l'acétate de vinyle et les autres monomères vinyliques, pourvu que le (co)polymère formé soit essentiellement insoluble dans la phase organique et que les non-solvants soient miscibles entre eux et avec les (co)monomères.

11. Procédé selon la revendication 10, caractérisé en ce qu'on emploie des compositions (co)monomères choisies dans le groupe formé par le méthacrylate de méthyle ou le styrène pris isolément ; les compositions à base de méthacrylate de méthyle et d'acétate de vinyle.

12. Procédé selon l'une quelconque des revendications 1 à 11, caractérisé en ce qu'on utilise un système amorceur dont au moins l'un des constituants est insoluble dans la phase organique du milieu réactionnel, le ou lesdits constituants étant solubles dans la phase aqueuse.

13. Procédé selon l'une quelconque des revendications 1 à 12, caractérisé en ce qu'on emploie un système amorceur choisi dans le groupe formé des persels ; du peroxyde d'hydrogène ; des persels ou du peroxyde d'hydrogène associés à un réducteur minéral ou organique ; des sytèmes amorceurs dont l'un des composants est soluble dans l'eau, l'autre composant étant soluble dans l'eau et insoluble dans la phase organique ; des systèmes amorceurs formés de composant réducteurs, solubles dans la composition (co)monomère et peu solubles dans l'eau, et de composants oxydants, d'activation, insolubles dans la phase organique et solubles dans l'eau.

14. Procédé selon l'une quelconque des revendications 1 à 13, caractérisé par le fait que le système amorceur représente de 0,01 à 1 % et de préférence de 0,02 à 0,1 % en poids par rapport au(x) (co)monomère(s) mis en oeuvre et/ou de 0,01 à 5 % et de préférence de 0,05 à 1,5 % en poids par rapport à l'eau de la solution aqueuse;

15. Procédé selon l'une quelconque des revendications 1 à 14, caractérisé en ce qu'on ajoute dans la phase aqueuse au moins un produit hydrosoluble choisi parmi les sels minéraux, les composés organiques et les monomères hydrosolubles.

## Claims

1. Process for the preparation of (co)polymers soluble in their (co)monomer composition by suspended emulsion polymerization, characterized in that the (co)polymers are insoluble in the organic phase used, consisting of (co)monomer composition and nonsolvent(s).

2. Process according to Claim 1, characterized in that, after preparation of the aqueous solution of at least part of the initiator system, a finely divided dispersion of said solution in the organic phase is first produced and the reaction mixture prepared in this way is then subjected to conditions for polymerization in a single stage carried out under moderate stirring.

3. Process according to Claim 1, characterized in that the operations for finely divided dispersion of the aqueous solution of at least part of the initiator system in the organic phase and for starting the polymerization of the latter under high-turbulence agitation are carried out conjointly in a first stage until a degree of conversion of generally between 1 and 50 % and preferably of between 3 and 25 % is obtained, a complementary mixture of (co)monomer composition and nonsolvent(s), identical to/or different from that used during the first stage, is added to the reaction mixture if appropriate and the reaction mixture is then subjected, during a second stage, to a polymerization under agitation which is slow but remains sufficient to prevent the reagglomeration of the particles undergoing development.

4. Process according to Claim 1, characterized in that the operations for finely divided dispersion of the aqueous solution of at least part of the initiator system in the organic phase and for prepolymerization of the latter under high-turbulence agitation are carried out conjointly in a first step, in an apparatus termed a prepolymerizer, until a degree of conversion of generally between 1 and 30 % and preferably of between 3 and 15 % is obtained and, in a second step, the reaction mixture is then subjected to a final polymerization under agitation which is slow but remains sufficient to prevent the reagglomeration of the particles undergoing development.

5. Process according to Claim 4, characterized in that, between the two steps, a complementary mixture of (co)monomer composition and nonsolvent(s), which is identical to/or different from that used during the first step, is added to the reaction mixture.

6. Process according to Claim 1, characterized in that a preliminary operation for dispersion of an aqueous solution of at least part of the initiator system in finely divided form in the organic phase is carried out and the complementary part of the initiator system is then dissolved in the organic phase conjointly with a polymerization operation in one or two stages, or with a prepolymerization operation followed by a final polymerization.

7. Process according to any one of Claims 1 to 6, characterized in that, in the case where an initiator system composed of several water-soluble constituents is used, the aqueous solutions of the said constituents are introduced separately into the reaction mixture at various stages of the polymerization process.

8. Process according to any one of Claims 1 to 7, characterized in that at least one emulsifier chosen from the group formed by emulsifiers of the cationic type, such as quaternary ammonium salts, of the anionic type, such as fatty acid soaps, alkali metal alkyl sulphates, alkali metal alkylsulphonates, alkali metal alkylarylsulphonates, alkali metal alkylsulphosuccinates and alkali metal alkyl phosphates, or of the nonionic type, such as the polycondensation products of ethylene oxide and/or propylene oxide with various hydroxyl-containing organic compounds, is introduced into the reaction mixture, in particular via the aqueous solution of at least part of the initiator system.

9. Process according to any one of Claims 1 to 8, characterized in that at least one suspending agent chosen from the group formed by polyvinyl alcohols, cellulose derivatives such as methyl cellulose or carboxycellulose, and gelatins is introduced into the reaction mixture, in particular via the aqueous solution of at least part of the initiator system.

10. Process according to any one of Claims 1 to 9, characterized in that (co)monomer compositions are, used in which at least one of the monomers is chosen from the group formed by alkyl acrylates, such as methyl acrylate, alkyl methacrylates, such as methyl methacrylate, styrene monomers, such as styrene, acetates, such as vinyl acetate, and the other vinyl monomers, provided that the (co)polymer formed is essentially insoluble in the organic phase and that the nonsolvents are miscible with one another and with the (co)monomers.

11. Process according to Claim 10, characterized in that (co)monomer compositions are used which are chosen from the group formed by methyl methacrylate or styrene taken on their own, and compositions based on methyl methacrylate and vinyl acetate.

12. Process according to any one of Claims 1 to 11, characterized in that an initiator system is used in which at least one of the constituents is insoluble in the organic phase of the reaction mixture, the said constituent or constituents being soluble in the aqueous phase.

13. Process according to any one of Claims 1 to 12, characterized in that an initiator system is used which is chosen from the group formed by persalts; hydrogen peroxide; persalts or hydrogen peroxide in combination with an inorganic or organic reducing agent; initiator systems in which one of the components is soluble in water, the other component being soluble in water and insoluble in the organic phase; initiator systems formed from reducing components, which are soluble in the (co)monomer composition and sparingly soluble in water, and activating oxidizing components, which are insoluble in the organic phase and soluble in water.

14. Process according to any one of Claims 1 to 13, characterized in that the initiator system represents from 0.01 to 1 % and preferably from 0.02 to 0.1 % by weight with respect to the (co)monomer(s) used and/or from 0.01 to 5 % and preferably from 0.05 to 1.5 % by weight with respect to the water in the aqueous solution.

15. Process according to any one of Claims 1 to 14, characterized in that at least one water-soluble product chosen from inorganic salts, organic compounds and water-soluble monomers is added to the aqueous phase.

## Patentansprüche

1. Verfahren zur Herstellung von in ihrer (co)monomerischen Zusammensetzung löslichen (Co-)Polymeren durch Polymerisation in suspendierter Emulsion, dadurch gekennzeichnet, daß die (Co-)Polymeren in der eingesetzten organischen Phase, die aus (co)monomerischer Zusammensetzung und Nichtlösemittel(n) zusammengesetzt ist, unlöslich sind.

2. Verfahren nach Anspruch 1, dadurch gekennzeichnet, daß man nach der Herstellung der wäßrigen Lösung mindestens eines Teils des Startersystems zunächst eine feinverteilte Dispersion dieser Lösung in der organischen Phase durchführt und dann das so hergestellte Reaktionsmilieu den Polymerisationsbedingungen in einer einzigen Stufe unter mäßigem Rühren unterwirft.

3. Verfahren nach Anspruch 1, dadurch gekennzeichnet, daß man in einer ersten Stufe den Verfahrensschritt der feinverteilten Dispersion der wäßrigen Lösung mindestens eines Teils der Startersystems in der organischen Phase und den Verfahrensschritt des Polymerisationsbeginns dieser Dispersion unter heftigerem Rühren zusammen durchführt, bis man einen im allgemeinen zwischen 1 und 50 %, vorzugsweise zwischen 3 und 25 %, liegenden Umsatz erhält, man gegebenenfalls zu dem Reaktionsmilieu eine zusätzliche Mischung aus (co)monomerischer Zusammensetzung und Nichtlösemittel(n), die mit der im Verlauf von Stufe 1 eingesetzten Mischung identisch oder von dieser verschieden ist, hinzugibt und man dann das Reaktionsmilieu während einer zweiten Stufe einer Polymerisation unter langsamem Rühren unterwirft, wobei das Rühren jedoch ausreicht, um eine Reagglomerisation der Körner bei der Bildung zu vermeiden.

4. Verfahren nach Anspruch 1, dadurch gekennzeichnet, daß man in einem ersten Schritt in einer Prepolymerisationsapparatur den Verfahrensschritt der feinverteilten Dispersion der wäßrigen Lösung mindestens eines Teils der Startersystems in der organischen Phase und den Verfahrensschritt der Prepolymerisation dieses Teils unter heftigerem Rühren zusammen durchführt, bis man einen Umsatz erreicht, der im allgemeinen zwischen 1 und 30 %, vorzugsweise zwischen 3 und 15 %, liegt, und man dann in einem zweiten Schritt das Reaktionsmilieu einer Endpolymerisation unter langsamem Rühren unterwirft, wobei das Rühren jedoch ausreicht, um eine Reagglomeration der Körner bei der Bildung zu vermeiden.

5. Verfahren nach Anspruch 4, dadurch gekennzeichnet, daß man zwischen den beiden Schritten zu dem Reaktionsmilieu eine zusätzliche Mischung aus (co)monomerischer Zusammensetzung und Nichtlösemittel(n) hinzugibt, die mit der im Verlauf des ersten Schrittes eingesetzten Zusammensetzung identisch oder von dieser verschieden ist.

6. Verfahren nach Anspruch 1, dadurch gekennzeichnet, daß man einen einleitenden Verfahrensschritt der Dispersion, in feinverteilter Form, einer wäßrigen Lösung mindestens eines Teils des Startersystems in der organischen Phase durchführt und man dann den zusätzlichen Teil des Startersystems in der organischen Phase in Lösung bringt zusammen mit der Durchführung der ein- oder zweistufigen Polymerisation oder zusammen mit einem Prepolymerisationsarbeitsgang, dem eine Endpolymerisation folgt.

7. Verfahren nach einem der Ansprüche 1 bis 6, dadurch gekennzeichnet, daß in dem Fall, wo man ein aus mehreren wasserlöslichen Bestandteilen zusammengesetztes Startersystem verwendet, die wäßrigen Lösungen dieser Bestandteile getrennt zu verschiedenen Zeitpunkten des Polymerisationsprozesses in das Reaktionsmilieu eingebracht werden.

8. Verfahren nach einem der Ansprüche 1 bis 7, dadurch gekennzeichnet, daß man in das Reaktionsmilieu, insbesondere mittels der wäßrigen Lösung mindestens eines Teils des Startersystems, mindestens einen Emulgator einbringt, der ausgewählt ist aus der Gruppe von Emulgatoren des kationischen Typs wie z.B. quaternären Ammoniumsalzen, des anionischen Typs wie z.B. Seifen von Fettsäuren, Alkalialkylsulfaten, Alkalialkylsulfonaten, Alkalialkylarylsulfonaten, Alkalialkylsulfosuccinaten und Alkalialkylphosphaten und Emulgatoren des nichtionischen Typs wie z.B. Polykondensaten des Ethylenoxids und/oder des Propylenoxids auf verschiedenen hydroxylierten organischen Verbindungen.

9. Verfahren nach einem der Ansprüche 1 bis 8, dadurch gekennzeichnet, daß man in das Reaktionsmilieu, insbesondere mittels der wäßrigen Lösung mindestens eines Teils des Startersystems, mindestens ein Suspensionsreagenz einbringt, das ausgewählt ist aus der Gruppe von Polyvinylalkoholen, Cellulosederivaten wie z.B. Methylcellulose sowie Carboxycellulose und Gelatinen.

10. Verfahren nach einem der Ansprüche 1 bis 9, dadurch gekennzeichnet, das man (co)monomerische Zusammensetzungen verwendet, in denen mindestens eines der Monomere ausgewählt ist aus der Gruppe von Alkylacrylaten wie z.B. Methylacrylat, Alkylmethacrylaten wie z.B. Methylmethacrylat, Styrolmonomeren wie z.B. Styrol, Acetaten wie z.B. Vinylacetat und anderen Vinylmonomeren, vorausgesetzt, daß das gebildete (Co-)Polymere in der organischen Phase im wesentlichen unlöslich ist und die Nichtlösemittel untereinander und mit den (Co-)Monomeren mischbar sind.

11. Verfahren nach Anspruch 10, dadurch gekennzeichnet, daß man (co)monomerische Zusammensetzungen verwendet, die ausgewählt sind aus der Gruppe von Methylmethacrylat oder Styrol, jeweils für sich genommen, und Zusammensetzungen auf Basis von Methylmethacrylat und Vinylacetat.

12. Verfahren nach einem der Ansprüche 1 bis 11, dadurch gekennzeichnet, daß man ein Startersystem verwendet, in dem mindestens einer der Bestandteile in der organischen Phase des Reaktionsmilieus unlöslich ist, und daß der oder die Bestandteile in der wäßrigen Phase löslich sind.

13. Verfahren nach einem der Ansprüche 1 bis 12, dadurch gekennzeichnet, daß man ein Startersystem verwendet, das ausgewählt ist aus der Gruppe von Persalzen; Wasserstoffperoxid; Persalzen oder Wasserstoffperoxid in Verbindung mit einem mineralischen oder organischem Reduktionsmittel; Startersystemen, in denen einer der Bestandteile wasserlöslich ist, während der andere Bestandteil in Wasser löslich und in der organischen Phase unlöslich ist; Startersystemen, die aus reduzierenden Bestandteilen, die in der (co)monomerischen Zusammensetzung löslich und in Wasser nur geringfügig löslich sind, und aus oxidierenden Bestandteilen zur Aktivierung, die in der organischen Phase unlöslich und in Wasser löslich sind, gebildet werden.

14. Verfahren nach einem der Ansprüche 1 bis 13, dadurch gekennzeichnet, daß die Menge an Startersystem 0,01 bis 1 Gew.-%, vorzugsweise 0,02 bis 0,1 Gew.-%, bezogen auf das oder die eingesetzten (Co-)Monomere, und/oder 0,01 bis 5 Gew.-%, vorzugsweise 0,05 bis 1,5 Gew.-%, bezogen auf das Wasser der wäßrigen Lösung, beträgt.

15. Verfahren nach einem der Ansprüche 1 bis 14, dadurch gekennzeichnet, daß man zu der wäßrigen Phase mindestens ein wasserlösliches Produkt hinzugibt, das ausgewählt ist aus mineralischen Salzen, organischen Verbindungen und wasserlöslichen Monomeren.
